# EUROPÄISCHE PATENTSCHRIFT

(11) **EP 0 870 628 B1**
(45) Veröffentlichungstag und Bekanntmachung des Hinweises auf die Patenterteilung: **24.09.2003**
(21) Anmeldenummer: 98104368.0
(22) Anmeldetag: 11.03.1998
(51) Int. Cl.: B60B 3/04, B60B 3/10, B60B 3/06

(54) **Rad für ein Kraftfahrzeug**
Wheel for motor vehicle
Roue pour véhicule à moteur

(30) Priorität: 11.04.1997 DE 19715072
(43) Veröffentlichungstag der Anmeldung: 14.10.1998
(73) Patentinhaber: Dr.Ing.h.c. F. Porsche Aktiengesellschaft, 70435 Stuttgart (DE)
(72) Erfinder: Stach, Jens, 71296 Heimsheim (DE)

(56) Entgegenhaltungen:
- EP-A- 0 547 313
- EP-A- 0 826 442
- DE-A- 19 601 778
- DE-A- 19 625 271

## Beschreibung

Die Erfindung bezieht sich auf einen Gußrohling eines Rades für ein Kraftfahrzeug nach dem Oberbegriff des Anspruchs 1.

In der Anmeldung, DE 196 01 778 A, ist ein Rad beschrieben, das aus zwei Schalenteilen, wie einem Felgenstern und einem Felgenbett besteht. Diese beiden Schalenteile werden teilweise ineinandergesteckt und in zusammentreffenden Bereichen, beispielsweise durch Schweißungen miteinander verbunden. Insbesondere erfolgt eine umlaufende Verbindung im Bereich der Luftöffnungen der beiden Schalenteile.

Aufgabe der Erfindung ist es, ein Rad für ein Kraftfahrzeug zu schaffen, das aus zwei Schalenteilen besteht, die zum Verbinden in einfacher Weise lagegenau, insbesondere im Bereich der Luftöffnungen zusammensteckbar auszubilden sind.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen im wesentlichen darin, daß durch das Vorsehen einer Guß-Schwimmhaut in den Luftöffnungen der Felge, welche im Zuge des Gießens der Felge erzeugt werden und einem anschließenden mechanischen Ausstanzen dieser Schwimmhaut, eine maßgenaue Luftöffnung im Schalenteil der Felge entsteht. Die Luftöffnungen weisen eine metallisch saubere Kante auf, die zum Verschweißen mit dem weiteren Schalenteil geeignet ist. Desweiteren werden die Toleranzen der Größe der Luftöffnung eingeschränkt und es wird ein genaues Einpaßmaß für die Wandung der weiteren Luftöffnung im Schalenteil des Felgensterns erzielt. Hiermit ist eine problemlose Schweißung, wie beispielsweise durch eine Elektronenstrahlschweißung oder durch andere Schweißverfahren durchführbar.

Die Guß-Schwimmhaut kann eine geringere Dicke als die Wandstärke des Schalenteils der Felge in diesem Bereich aufweisen und wenigstens mit einer Außenoberfläche der Felge bündig verlaufen. Auch ist nur ein die Luftöffnung umgrenzender Rand möglich, der dann zur Bildung der maßgenauen Luftöffnung ausgestanzt wird. Bevorzugt wird die Guß-Schwimmhaut bündig mit der Innenoberfläche des Schalenteils der Felge verlaufend vorgesehen, wobei die Schwimmhaut dünner als die Wanddicke der Schalenwand ausgebildet ist und sich an der Außenoberfläche eine Vertiefung ergibt.

Das Ausstanzen der Schwimmhaut erfolgt vorzugsweise über ein Werkzeug, das entsprechend der Anzahl der Luftöffnungen vorgesehene Stanzstempel besitzt, die gegen Gegenhalter arbeiten. Die angrenzenden Wandungen des Schalenteils der Felge am Gegenhalter sind etwa anliegend an diesem ausgeführt und jeweils zum Rand der Luftöffnung beabstandet. Desweiteren ist auch zum Ausschneiden der Schwimmhaut ein Fräsverfahren oder ein Laserschneidverfahren anwendbar.

Ein Ausführungsbeispiel der Erfindung ist in den Zeichnungen dargestellt und wird im folgenden näher beschrieben.

Es zeigen
- Fig. 1: eine Schnittdarstellung eines Rades aus zwei Schalenteilen bestehend, wobei das eine Schalenteil die Felge und das weitere Schalenteil den Felgenstern bildet,
- Fig. 2: eine vergrößerte Darstellung des ein Teil des Rades bildenden Felgen-Schalenteiles mit Guß-Schwimmhaut und Stanzeinrichtung und
- Fig. 3: eine Anordnung des Stanzstempels an der Innenseite des Rades.

Wie in Fig. näher gezeigt ist, besteht das Rad 1 im wesentlichen aus zwei Schalenteilen 2, 3, welche die Felge F mit Felgenbett 2a und den Felgenstern 3a darstellen. Diese Schalenteile 2, 3 werden getrennt hergestellt, zu einem Rad zusammengesteckt und mittels einer Verbindung, beispielsweise durch Schweißungen oder durch Kleben unlösbar miteinander verbunden.

Der Felgenstern 3a bildet den äußeren Teil des Rades 1 und umfaßt eine Außenwandung 4, in der Luftöffnungen 5 und zylinderförmige Aufnahmen für Radbefestigungsschrauben vorgesehen sind, die um eine Nabenhülse herum angeordnet werden. Der äußere Rand des Felgensterns 3a wird von einem Felgenhorn 8 gebildet, an den sich ein ins Felgeninnere erstreckender Ringsteg 9 anschließt, der Teil einer Humpfläche ist.

Die Luftöffnungen 5 im Felgenstern 3a weisen zur Bildung von Luftkanäle nach einwärts gebogene Begrenzungswandungen 10 auf, die in benachbarten Luftöffnungen 11 der Felge F hineinragen. Diese Begrenzungswandungen 10 bilden zwischen den Luftöffnungen 5 und 11 Hohlspeichen.

Das Schalenteil 2 der Felge F umfaßt eine Innenwandung 12 mit einem vertieft abgesetzten Felgenbett 2a. An dieses schließt sich über eine hochgestellte Anformung ein stirnseitiger Ringsteg 14 an, der den Ringsteg 9 des Felgensterns 3a zur Verbindung gegenübersteht. In der Innenwand 12 sind die Luftöffnungen 5 vorgesehen, welche Öffnungsränder 15 aufweisen.

Die Begrenzungswandungen 10 der Luftöffnungen 5 des Felgensterns 3a sind ins Radinnere gerichtet ausgeführt und liegen vorzugsweise innenseitig der Öffnungsränder 15 der Luftöffnungen 11 im Schalenteil 2 der Felge F an.

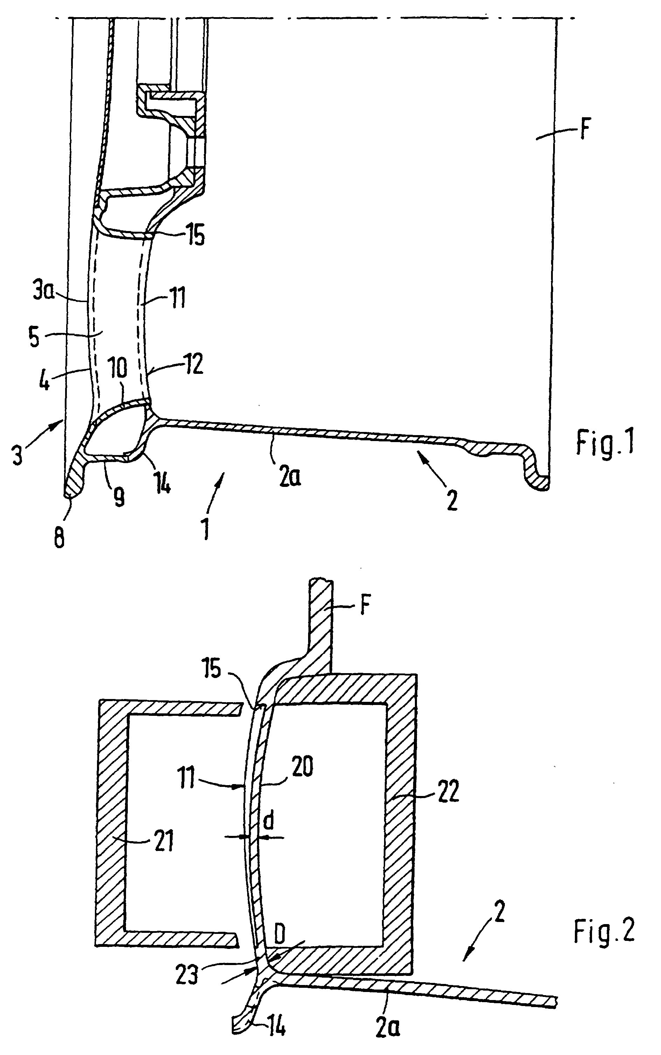

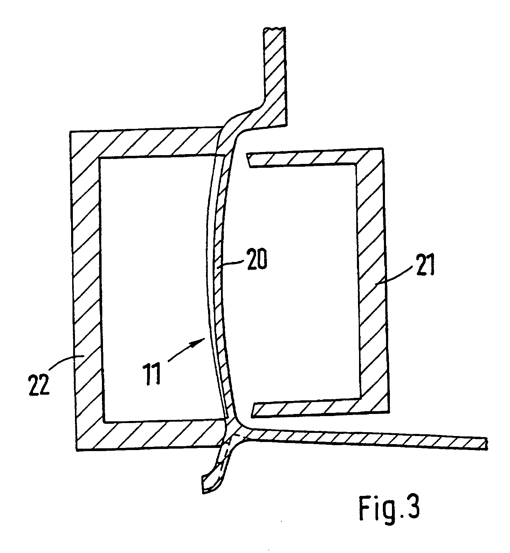

In Fig. 2 ist ein Teil des Rades 1 im Bereich einer Luftöffnung 11 des Schalenteils 2 der Felge F dargestellt. Die Luftöffnung 11 ist von einer Guß-Schwimmhaut 20 geschlossen. Diese Schwimmhaut 20 wird beim Guß der Felge F mit hergestellt. Sie wird mittels eines Stanzvorganges oder eines Fräsverfahrens oder eines Laserschneidverfahrens herausgetrennt. Das Ausstanzen erfolgt über ein Werkzeug, welches aus einem Stanzstempel 21 mit Gegenhalter 22 besteht. Das Werkzeug kann so ausgebildet sein, daß alle fünf Luftöffnungen 11 der Felge F zusammen in einem Arbeitsgang ausgestanzt werden können. Der Stanzstempel 21 kann innenseitig oder außenseitig angeordnet sein. Beim innenseitigen Anordnen des Stanzstempels 21 ist das Ausstanzen einer größeren Luftöffnung möglich, wie in Fig. 3 näher dargestellt ist.

Die Schwimmhaut 20 weist eine geringere Dicke d auf als die anschließende Wandung 23 der Felge F mit der Dicke D und verläuft zumindest mit einer Außenoberfläche der Felgenwand 23 bündig. Desweiteren ist die Dicke d der Schwimmhaut 20 durchgehend von gleicher Stärke.

Wie in Fig. 2 näher gezeigt, verläuft die Guß-Schwimmhaut 20 mit der inneren Oberfläche der Felgenwandung 23 bündig und liegt zur äußeren Oberfläche der Wandung 23 vertieft.

Die Guß-Schwimmhaut 20 kann auch nur aus einem Rand bestehen, wobei ein unbestimmter Mittenbereich der Luftöffnung 15 frei von einer Schwimmhaut 20 ausgebildet sein kann. Wichtig ist nur, daß der Öffnungsrand 15 über den Stanzstempel 21 ausgeschnitten und sich eine metallisch saubere Umlaufkante ergibt.

Wie in Fig. 1 näher dargestellt, wird zur Verbindung der beiden Schalenteile 2, 3 die Wandung 10 der Luftöffnung 5 des Schalenteils 3 in die Luftöffnung 11 des Schalenteils 2 zum Verbinden hineingesteckt. Durch das maßgenaue Ausstanzen dieser Luftöffnung 11 kann die Wandung 10 paßgenau eingesetzt werden und eine Verschweißung ohne wesentliche Spalte erfolgen.

## Patentansprüche

1. Gußrohling einer Felge (F) für ein Rad eines Kraftfahrzeuges, wobei das Rad einen Felgenstern (3a) und die Felge (F) aufweist, und wobei der Felgenstern und die Felge jeweils aus einem Schalenteil gebildet sind, welche zwischen sich Hohlspeichen aufweisen und jeweils Wandungen mit Luftöffnungen besitzen und fest miteinander verbindbar sind, **dadurch gekennzeichnet, daß** der Gußrohling der Felge (F) mit ausstanzbaren Guß-Schwimmhäuten (20) versehen ist, wobei durch Ausstanzen dieser die Luftöffnungen der Felge (F) gebildet werden.

2. Gußrohling nach Anspruch 1, **dadurch gekennzeichnet, daß** die Guß-Schwimmhaut (20) eine geringere Dicke (d) aufweist, als die Wandstärke (23) der Felge (F).

3. Gußrohling nach den Ansprüchen 1 oder 2, **dadurch gekennzeichnet, daß** die Guß-Schwimmhaut (20) wenigstens mit einer Außenoberfläche der Felge (F) bündig verläuft.

4. Gußrohling nach den Ansprüchen 1 oder 2, **dadurch gekennzeichnet, daß** die Guß-Schwimmhaut (20) eine gleichbleibende Dicke (d) besitzt und bündig mit der Innenoberfläche der Felge (F) verläuft.

5. Gußrohling nach Anspruch 1, **dadurch gekennzeichnet, daß** die Guß-Schwimmhaut (20) aus einem umlaufenden Rand an der Luftöffnung (11) besteht und ein Mittenbereich der Luftöffnung (11) durchgehend offen ist.

6. Gußrohling nach einem oder mehreren der vorhergehenden Ansprüche, **dadurch gekennzeichnet, daß** die ausgestanzte Guß-Schwimmhaut (20) eine Größe aufweist, die der Größe einer eine Luftöffnung (5) bildenden, umlaufenden Begrenzungswand (10) des Felgensterns (3a) entspricht und die Begrenzungswand (10) in die ausgestanzte Luftöffnung (5) der Felge (F) paßgenau zum Verbinden einsteckbar ausgebildet ist.

## Claims

1. A cast blank of a rim (F) for a wheel of a motor vehicle, wherein the wheel comprises a rim star (3a) and the rim (F) and wherein the rim star and the rim are each formed from a shell part having hollow spokes between them and each having walls with air openings and being fixedly connectable to one another, **characterised in that** the cast blank of the rim (F) is provided with casting webs (20) which can be stamped out, the air openings in the rim (F) being formed by stamping out the casting webs (20).

2. A cast blank according to claim 1, **characterised in that** the casting web (20) has a smaller thickness (d) than the wall thickness (23) of the rim (F).

3. A cast blank according to claim 1 or 2, **characterised in that** the casting web (20) extends flush at least with an outer surface of the rim (F).

4. A cast blank according to claim 1 or 2, **characterised in that** the casting web (20) has a uniform thickness (d) and extends flush with the inner surface of the rim (F).

5. A cast blank according to claim 1, **characterised in that** the casting web (20) comprises a circumferential edge at the air opening (11), and a middle region of the air opening (11) is continuously open.

6. A cast blank according to one or more of the preceding claims, **characterised in that** the stamped-out casting web (20) has a size corresponding to the size of a circumferential boundary wall (10) of an air opening (5) in the rim star (3a), and the boundary wall (10) is formed so as to be insertable into the stamped-out air opening (5) in the rim (F) with an accurate fit for connection.

## Revendications

1. Ebauche en fonte d'une jante (F) pour une roue d'un véhicule automobile, la roue comportant une étoile de jante (3a) et la jante (F), et l'étoile de jante ainsi que la jante, formées chacune d'une partie de coquille, comportent entre elles des rayons creux et possèdent des parois avec des orifices d'air, et peuvent être reliées entre elles de manière fixe, **caractérisée en ce que** l'ébauche en fonte de la jante (F) est pourvue d'enveloppes flottantes de fonte (20) pouvant être estampées, les orifices d'air de la jante (F) étant formés par des estampages de celles-ci.

2. Ebauche en fonte selon la revendication 1, **caractérisée en ce que** l'enveloppe flottante de fonte (20) présente une moindre épaisseur (d) que l'épaisseur de paroi (23) de la jante (F).

3. Ebauche en fonte selon les revendications 1 ou 2, **caractérisée en ce que** l'enveloppe flottante de fonte (20) s'étend au moins au niveau d'une surface extérieure de la jante (F).

4. Ebauche en fonte selon les revendications 1 ou 2, **caractérisée en ce que** l'enveloppe flottante de fonte (20) présente une épaisseur (d) constante et s'étend au niveau de la surface intérieure de la jante (F).

5. Ebauche en fonte selon la revendication 1, **caractérisée en ce que** l'enveloppe flottante de fonte (20) est constituée d'un bord périphérique sur l'orifice d'air (11) et une zone centrale de l'orifice d'air (11) est ouverte de part en part.

6. Ebauche en fonte selon une ou plusieurs des revendications précédentes, **caractérisée en ce que** l'enveloppe flottante de fonte (20) estampée présente une dimension qui correspond à la dimension d'une paroi de délimitation (10) périphérique, formant un orifice d'air (5), de l'étoile de jante (3a), et la paroi de délimitation (10) est réalisée de manière à pouvoir s'enficher dans l'orifice d'air (5) estampé de la jante (F), de manière exactement ajustée pour la liaison.
